# EUROPEAN PATENT APPLICATION

(11) **EP 4 361 692 A1**
(43) Date of publication of application: **01.05.2024**
(21) Application number: 22827949.3
(22) Date of filing: 08.03.2022
(51) Int. Cl.: G02B 6/44

(54) **OPTICAL FIBER CABLE AND MANUFACTURING METHOD FOR OPTICAL FIBER CABLE**

(30) Priority: 23.06.2021 JP 2021103969
(71) Applicant: Fujikura Ltd., Tokyo 135-8512 (JP)
(72) Inventor: HIKIMA, Daisuke, Sakura-shi, Chiba 285-8550 (JP); SATO, Shinnosuke, Sakura-shi, Chiba 285-8550 (JP); TAKEDA, Daiki, Sakura-shi, Chiba 285-8550 (JP); OSATO, Ken, Sakura-shi, Chiba 285-8550 (JP)
(74) Representative: Plasseraud IP
(86) International application number: PCT/JP2022/010083
(87) International publication number: WO 2022/270028

(57) **Abstract**

An optical fiber cable includes a core, a sheath housing the core, and a rip cord disposed between the core and the sheath. The core includes a plurality of optical fibers and a wrapping member which wraps the plurality of optical fibers. A recessed portion recessed inward in a radial direction of the core is formed in the wrapping member. At least a portion of the rip cord is positioned inside the recessed portion.

## Description

### [Technical Field]

The present invention relates to an optical fiber cable and the optical fiber cable.

Priority is claimed on Japanese Patent Application No. 2021-103969 filed on June 23, 2021, the content of which is incorporated herein by reference.

### [Background Art]

Patent Document 1 discloses an optical fiber cable including a core having a plurality of optical fibers, a sheath housing the core, and a rip cord used to tear the sheath.

### [Citation List]

### [Patent Document]

[Patent Document 1]
Japanese Patent No. 6134365

### [Summary of Invention]

### [PROBLEM TO BE SOLVED BY THE INVENTION]

For example, in the optical fiber cable of Patent Document 1, the rip cord is disposed in a space that is continuous in a circumferential direction. Therefore, the rip cord may move in the circumferential direction. If the rip cord unexpectedly moves in the circumferential direction, there is a likelihood that the rip cord will become entangled with the core and the optical fibers are damaged when a user tries to tear the sheath with the rip cord.

The present invention has been made in consideration of such circumstances, and an objective of the present invention is to provide an optical fiber cable and a method of manufacturing the optical fiber cable which are capable of suppressing movement of a rip cord in a circumferential direction.

### [MEANS TO SOLVE THE PROBLEM]

In order to solve the above-described problems, an optical fiber cable according to one aspect of the present invention includes a core including a plurality of optical fibers and a wrapping member which wraps the plurality of optical fibers, a sheath housing the core, and a rip cord disposed between the core and the sheath, wherein a recessed portion recessed inward in a radial direction of the core is formed in the wrapping member, and at least a portion of the rip cord is positioned inside the recessed portion.

Also, a method of manufacturing an optical fiber cable according to one aspect of the present invention includes preparing a core formed by wrapping a plurality of optical fibers with a wrapping member, a rip cord, and a nipple having a core hole and a rip cord hole, and introducing the rip cord which has passed through the rip cord hole into a recessed portion inside the core hole while forming the recessed portion recessed inward in a radial direction of the core in the wrapping member, when the core is inserted and extruded through the inside of the core hole and the rip cord is inserted and extruded through the inside of the rip cord hole.

### [EFFECTS OF THE INVENTION]

According to the above-described aspect of the present invention, it is possible to provide an optical fiber cable and a method of manufacturing the optical fiber cable which are capable of suppressing movement of a rip cord in a circumferential direction.

### [Brief Description of Drawings]

FIG. 1 is a cross-sectional view of an optical fiber cable according to an embodiment of the present invention.
FIG. 2A is a view illustrating a method of manufacturing the optical fiber cable according to the embodiment of the present invention.
FIG. 2B is a cross-sectional view taken along line IIB-IIB illustrated in FIG. 2A.
FIG. 2C is a cross-sectional view taken along line IIC-IIC illustrated in FIG. 2A.
FIG. 2D is a cross-sectional view taken along line IID-IID illustrated in FIG. 2A.

### [Description of Embodiments]

### (Optical fiber cable)

Hereinafter, an optical fiber cable according to an embodiment of the present invention will be described with reference to the drawings.

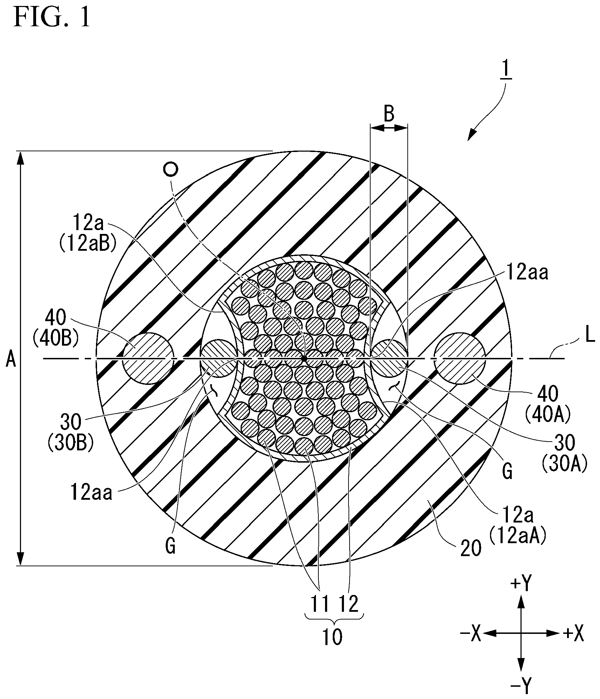

As illustrated in FIG. 1, an optical fiber cable 1 includes a core 10, a sheath 20 housing the core 10, a pair of rip cords 30, and a pair of tensile strength members 40.

### (Definition of directions)

Here, in the present embodiment, a direction along a central axis O of the core 10 is referred to as a longitudinal direction. A cross section perpendicular to the longitudinal direction is referred to as a transverse section. A line connecting centers of the pair of tensile strength members 40 in a transverse-sectional view is referred to as a neutral line L. A direction along the neutral line L is referred to as a neutral line direction X. One direction in the neutral line direction X is referred to as a +X direction or rightward. A direction opposite to the +X direction is referred to as a -X direction or leftward. A direction orthogonal to both the longitudinal direction and the neutral line direction X is referred to as a vertical direction Y. One direction in the vertical direction Y is referred to as a +Y direction or upward. A direction opposite to the +Y direction is referred to as a -Y direction or downward. When viewed from the longitudinal direction, a direction intersecting the central axis O is referred to as a radial direction, and a direction of revolving around the central axis O is referred to as a circumferential direction. In a transverse-sectional view, a direction approaching the central axis O is referred to as radially inward, and a direction away from the central axis O is referred to as radially outward.

The core 10 includes a plurality of optical fibers 11 and a wrapping member 12 that wraps the plurality of optical fibers 11. A shape of the core 10 of the present embodiment is substantially circular in a transverse-sectional view except for a portion in which a recessed portion 12a (to be described later) is formed. Note that, the term "substantially circular" also includes a case of being regarded as circular if manufacturing errors are removed.

As the optical fibers 11, optical fiber core wires, optical fiber element wires, optical fiber ribbons, or the like may be used. As a type of the optical fiber ribbon, the plurality of optical fibers 11 may form a so-called intermittently-fixed optical fiber ribbon. In the intermittently-fixed optical fiber ribbon, the plurality of optical fibers 11 are disposed in a disposition direction perpendicular to the longitudinal direction. Each two optical fibers 11 adjacent in the disposition direction are connected to each other by a plurality of connecting parts disposed intermittently in the longitudinal direction. Also, positions of each two connecting parts adjacent in the disposition direction are different from each other in the longitudinal direction. Thereby, if the intermittently-fixed optical fiber ribbon is pulled in the disposition direction, the plurality of optical fibers 11 spread in a mesh shape (spider web shape). Note that, a form of the optical fibers 11 included in the core 10 is not limited to the intermittently-fixed optical fiber ribbon, and may be changed as appropriate.

The wrapping member 12 may be a tape (sheet) that is laterally wound around the plurality of optical fibers 11. In other words, the wrapping member 12 may be a tape (sheet) wound around the plurality of optical fibers 11 in an SZ manner or a spiral manner. Alternatively, the wrapping member 12 may be a tape (sheet) that is longitudinally attached and wound around the plurality of optical fibers 11. In these cases, for example, a nonwoven fabric, a polyester tape, or the like may be used as the wrapping member 12 (tape, sheet). As the wrapping member 12 (tape, sheet), a water-absorbing tape obtained by imparting water absorption properties to a nonwoven fabric, a polyester tape, or the like may be used. In this case, it is possible to enhance a waterproof performance of the optical fiber cable 1.

Alternatively, the wrapping member 12 may be a seamlessly formed tube (protective layer). In this case, as a material forming the wrapping member 12 (tube), for example, a polyolefin (PO) resin such as polyethylene (PE), polypropylene (PP), an ethylene ethyl acrylate copolymer (EEA), an ethylene vinyl acetate copolymer (EVA), and an ethylene propylene copolymer (EP), polyvinyl chloride (PVC), or the like may be used. The wrapping member 12 (tube) may be formed using a mixture (alloy) of the above-described resins.

The recessed portion 12a is formed in at least a portion of an outer circumferential surface of the wrapping member 12. In other words, the wrapping member 12 is bent radially inward at the recessed portion 12a. More specifically, the outer circumferential surface of the wrapping member 12 is recessed radially inward at the recessed portion 12a. An inner circumferential surface of the wrapping member 12 protrudes radially inward at the recessed portion 12a. In the present embodiment, two recessed portions 12a are formed. One rip cord 30 is disposed inside each of the recessed portions 12a. The recessed portion 12a is formed by, for example, pressing the rip cord 30 against the core 10. Since the plurality of optical fibers 11 are wrapped by the wrapping member 12, the plurality of optical fibers 11 coming apart is curbed even when the rip cord 30 presses against the core 10. A thickness (dimension in the radial direction) of the wrapping member 12 may be smaller than an outer diameter of the rip cord 30.

As a material of the sheath 20, a polyolefin (PO) resin such as polyethylene (PE), polypropylene (PP), an ethylene ethyl acrylate copolymer (EEA), an ethylene vinyl acetate copolymer (EVA), and an ethylene propylene copolymer (EP), polyvinyl chloride (PVC), or the like may be used. The sheath 20 may be formed using a mixture (alloy) of the above-described resins.

In the present specification, of the pair of tensile strength members 40, the tensile strength member 40 positioned on a right side may be referred to as a first tensile strength member 40A, and the tensile strength member 40 positioned on a left side may be referred to as a second tensile strength member 40B.

The pair of tensile strength members 40 are embedded in the sheath 20 with the core 10 positioned therebetween in the neutral line direction X. The tensile strength members 40 each extend linearly in the longitudinal direction. The tensile strength member 40 has a higher spring constant or tensile strength in the longitudinal direction than the sheath 20. As a material of the tensile strength member 40, for example, a metal wire (steel wire, or the like), a fiber-reinforced plastic (FRP), or the like may be used. When the tensile strength member 40 uses an FRP, for example, aramid fibers, glass fibers, or the like may be employed as fibers contained in the FRP. When a tension in the longitudinal direction is applied to the optical fiber cable 1, the tensile strength member 40 has a role of receiving the tension to protect the optical fiber 11. Since the tensile strength member 40 does not easily expand and contract in the longitudinal direction, the optical fiber cable 1 does not easily bend in the neutral line direction X. On the other hand, the optical fiber cable 1 tends to bend in the vertical direction Y that is perpendicular to the neutral line direction X.

In the present specification, of the pair of rip cords 30, the rip cord 30 positioned on a right side may be referred to as a first rip cord 30A, and the rip cord 30 positioned on a left side may be referred to as a second rip cord 30B.

The rip cords 30 of the present embodiment are each positioned within a range of -45° to +45° around the central axis O with the neutral line L as a reference in a transverse-sectional view. Each of the rip cords 30 overlaps one of the pair of tensile strength members 40 in the radial direction. That is, the first rip cord 30A and the first tensile strength member 40A overlap in the radial direction. The second rip cord 30B and the second tensile strength member 40B overlap in the radial direction. In the example of FIG. 1, the pair of rip cords 30 are disposed to sandwich the core 10 in the neutral line direction X. That is, each of the rip cords 30 is disposed at a position of 0° around the central axis O with the neutral line L as a reference. Each of the rip cords 30 extends linearly in the longitudinal direction.

The rip cords 30 are each disposed between the core 10 and the sheath 20 in the radial direction. More specifically, at least a portion of each rip cord 30 is positioned within the two recessed portions 12a of core 10. One of the two rip cords 30 may be housed in the recessed portion 12a in its entirety. Both the two rip cords may be housed in the two recessed portions 12a in their entirety. Alternatively, both the two rip cords 30 may protrude radially outward from the two recessed portions 12a.

Of the two recessed portions 12a, one recessed portion 12a positioned on a right side may be referred to as a first recessed portion 12aA, and the other recessed portion 12a positioned on a left side may be referred to as a second recessed portion 12aB.

In the present embodiment, two gaps G are formed between the core 10 and the sheath 20. One of the two gaps G is a space surrounded by the first recessed portion 12aA and an inner surface of the sheath 20. The other of the two gaps G is a space surrounded by the second recessed portion 12aB and the inner surface of the sheath 20. In the present embodiment, a dimension of the gap G in the radial direction is smaller than a dimension of the gap G in the circumferential direction. The rip cord 30 is sandwiched between the core 10 and the sheath 20 in the gap G. Note that, dimensions of the gap G in the radial direction and the circumferential direction may be changed as appropriate.

The rip cord 30 is used to tear the sheath 20. At the time of tearing the sheath 20, a user grips the rip cord 30 and bends the rip cord 30 radially outward. Therefore, it is desirable that the rip cord 30 be formed of a flexible material. For the rip cord 30, a material that is not easily deformed or fractured by a stress at the time of tearing the sheath 20 is used. That is, a material having a high Young's modulus and a high fracture strength is used for the rip cord 30. Also, a thickness (diameter) of the rip cord 30 may be designed according to an object (member) to be torn by the rip cord 30. For example, it is desirable that a Young's modulus of the rip cord 30 be 300 kgf/mm2 or less. Particularly, the rip cord 30 having a Young's modulus of 140 to 180 kgf/mm2 is suitable. As the rip cord 30, for example, a synthetic fiber thread (polyester or the like) or the like may be used. Also, as the rip cord 30, a columnar rod made of polypropylene (PP) or nylon may be used.

### (Method of manufacturing optical fiber cable)

Next, an example of a method of manufacturing the optical fiber cable 1 configured as described above will be described.

A nipple 50 and a die 60 are each a tubular part. The die 60 is disposed to surround at least a portion of the nipple 50 from the outside in the radial direction. A gap in the radial direction is provided between the nipple 50 and the die 60. The nipple 50 and the die 60 are disposed so that central axes thereof are substantially coincident with each other. Note that, the term "substantially coincident" also includes a case in which it is possible to regard both the central axes as coincident if errors at the time of disposition are removed. In a manufacturing apparatus of the optical fiber cable, a direction along the central axes of the nipple 50 and the die 60 is referred to as an extrusion direction Z. In the drawings, a downstream side (one side) in the extrusion direction Z is expressed as a +Z side, and an upstream side (the other side) is expressed as a -Z side. Note that, the extrusion direction Z substantially coincides with the longitudinal direction described above.

In the method of manufacturing the optical fiber cable according to the present embodiment, a step (extrusion step) of extrusion-molding the sheath 20 toward the downstream side while feeding the core 10, the rip cord 30, and the tensile strength member 40 toward the downstream side is performed.

The nipple 50 includes a core hole 52 positioned at a center in the radial direction and a circumferential wall 51 surrounding the core hole 52. An inner diameter of the core hole 52 is substantially constant in the extrusion direction Z. Note that, the term "substantially constant" also includes a case of being regarded as constant in the extrusion direction Z if manufacturing errors are removed. The core hole 52 is a portion through which the core 10 is inserted during the extrusion step. An inner diameter of the core hole 52 may not be substantially constant in the extrusion direction Z.

An outer diameter of the circumferential wall 51 varies in the extrusion direction Z. More specifically, an outer diameter at an end portion of the circumferential wall 51 on the upstream side (end portion on the -Z side) is larger than an outer diameter at an end portion of the circumferential wall 51 on the downstream side (end portion on the +Z side). In an intermediate portion of the circumferential wall 51 in the extrusion direction Z, the outer diameter of the circumferential wall 51 decreases toward the downstream side. In other words, a tapered surface S1 is included on an outer circumferential surface of the circumferential wall 51. A tapered surface S2 is provided on an inner circumferential surface of the die 60. A gap between the tapered surface S1 and the tapered surface S2 is constant in the extrusion direction Z. A pair of rip cord holes 53 and a pair of tensile strength member holes 54 are formed in the circumferential wall 51.

The rip cord holes 53 each extend linearly from the end portion on the upstream side (end portion on the -Z side) of the circumferential wall 51 toward the downstream side, and bend radially inward at an intermediate portion of the nipple 50 in the extrusion direction Z to communicate with the core hole 52. The rip cord hole 53 is a hole through which the rip cord 30 is inserted.

The tensile strength member holes 54 each extend in the extrusion direction Z so that a distance between itself and the outer circumferential surface of the circumferential wall 51 is kept constant. The tensile strength member hole 54 each open to an end surface on the downstream side and an end surface on the upstream side of the circumferential wall 51. The tensile strength member holes 54 each communicate with an internal space of the die 60 at an end portion of the nipple 50 on the downstream side. The tensile strength member hole 54 is a hole through which the tensile strength member 40 is inserted.

In the extrusion step, the core 10 in which the plurality of optical fibers 11 are wrapped with the wrapping member 12 is inserted through the core hole 52 of the nipple 50 and is extruded toward the downstream side. Note that, a step of wrapping the plurality of optical fibers 11 with the wrapping member 12 may be performed in advance. Also, the plurality of optical fibers 11 may be twisted together in an SZ manner or a spiral manner inside the wrapping member 12.

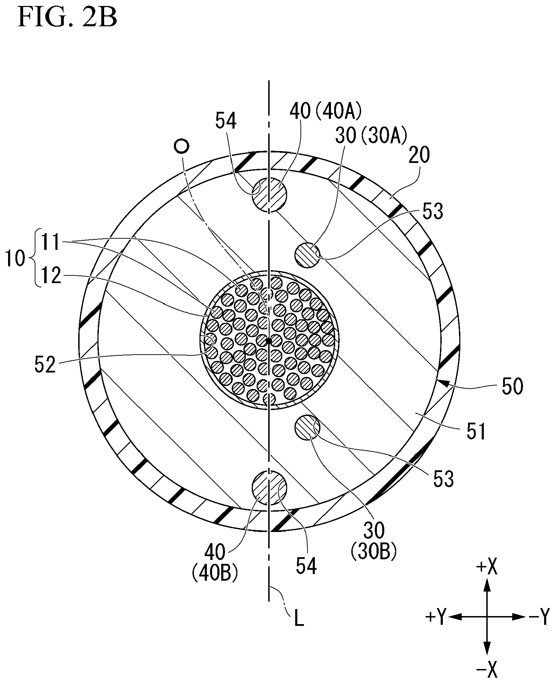

A material (a resin or the like) that forms the sheath 20 flows into the internal space of the die 60 with it heated and softened and is extruded toward the downstream side. One of the rip cords 30 is inserted into each of the two rip cord holes 53 and extruded toward the downstream side. One of the tensile strength members 40 is inserted into each of the two tensile strength member holes 54 and extruded toward the downstream side. FIG. 2B is a transverse-sectional view of the manufacturing apparatus of an optical fiber cable at a point in which the members 10, 30, and 40 described above are inserted into the holes 52, 53, and 54, respectively.

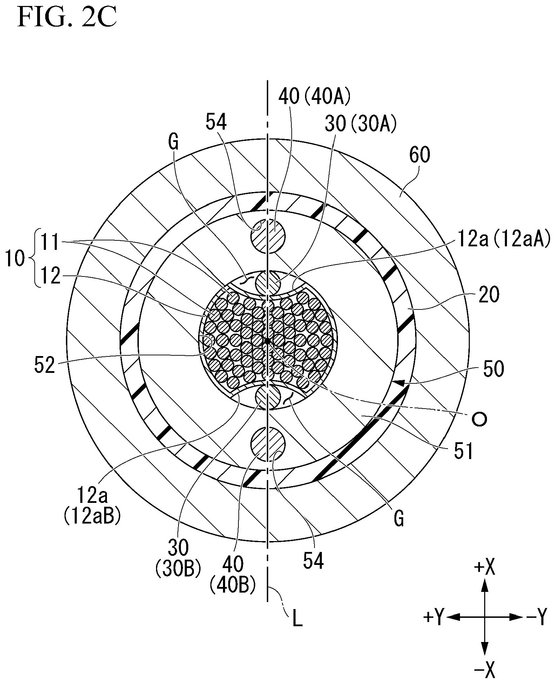

Since rip cord holes 53 each communicate with the core hole 52, the rip cords 30 that each have passed through the rip cord holes 53 join the core 10 in the core hole 52. At this time, the rip cords 30 each are pressed against the core 10 in the radial direction. Thereby, the two recessed portions 12a recessed radially inward in the radial direction are formed in the core 10. Further, one of the rip cords 30 is introduced into each of the two recessed portions 12a. In a transverse-sectional view, the rip cord 30 may be positioned inside the recessed portion 12a in its entirety, or a portion of the rip cord 30 may protrude radially outward from the recessed portion 12a. FIG. 2C is a transverse-sectional view of the manufacturing apparatus of an optical fiber cable at the point described above.

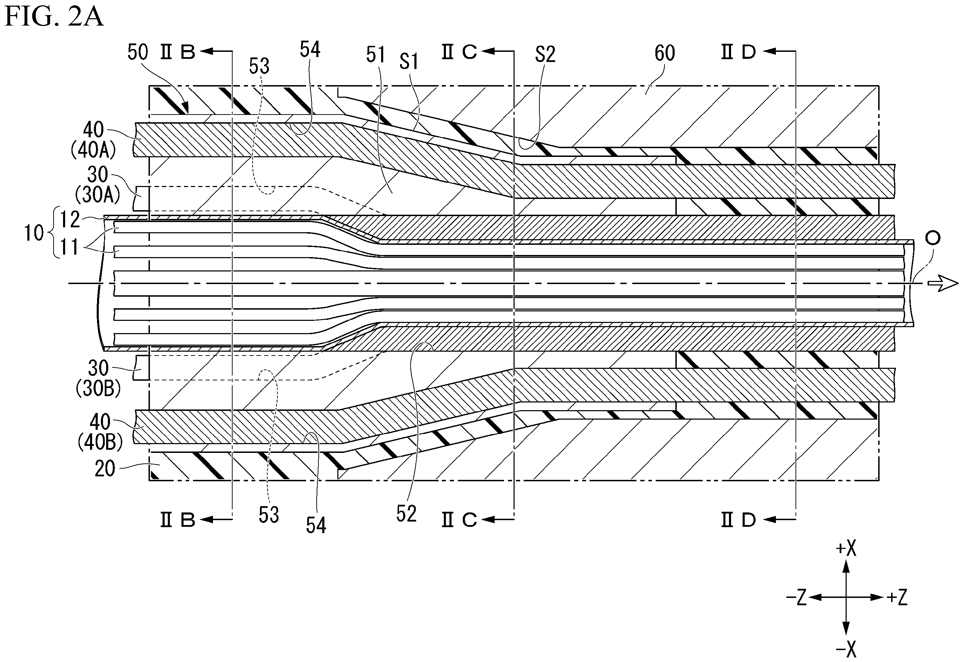

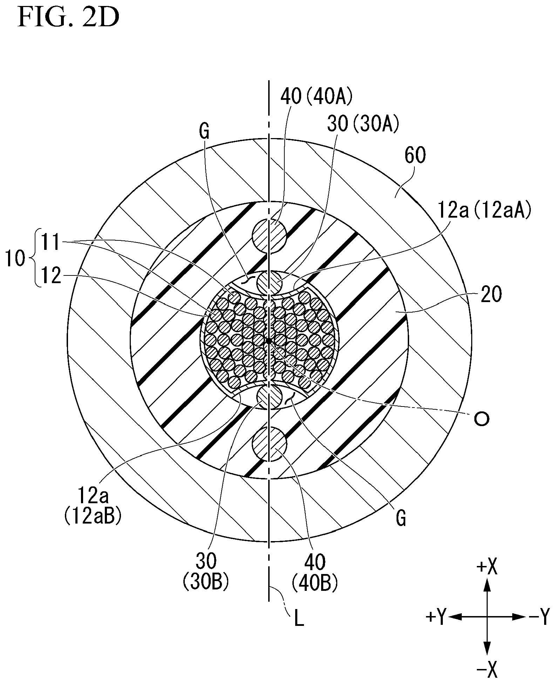

Since the tensile strength member holes 54 each communicate with the internal space of the die 60, the tensile strength members 40 each join the sheath 20 in the internal space. FIG. 2D is a transverse-sectional view of a manufacturing apparatus 2 of an optical fiber cable at the point described above. In the example of FIG. 2A, a point in which the tensile strength member 40 joins the sheath 20 is positioned downstream of a point in which the rip cord 30 joins the core 10. Note that, the point in which the tensile strength member 40 joins the sheath 20 is positioned upstream of the point in which the rip cord 30 joins the core 10. Alternatively, the positions of the two points in the extrusion direction Z may be the same.

Since an end portion of the die 60 on the downstream side is positioned downstream of the end portion of the nipple 50 on the downstream side, the sheath 20 joins the core 10 in the internal space of the die 60. Thereby, forming of the optical fiber cable 1 is completed. Note that, a shape of the sheath 20 may be appropriately arranged in the internal space of the die 60.

Next, an operation of the optical fiber cable 1 configured as above will be described.

The rip cord 30 of the present embodiment is disposed inside the recessed portion 12a formed in the wrapping member 12. Thereby, movement of the rip cord 30 in the circumferential direction is suppressed compared to a case in which, for example, the recessed portion 12a is not formed in the wrapping member 12. Particularly, since the rip cord 30 of the present embodiment is sandwiched between the core 10 and the sheath 20, movement of the rip cord 30 in the circumferential direction is more effectively suppressed.

As described above, the optical fiber cable 1 does not easily bend in the neutral line direction X and tends to bend in the vertical direction Y. Here, if it is assumed that the rip cords 30 are disposed to sandwich the core 10 in the vertical direction Y, when the optical fiber cable 1 is bent in the vertical direction Y, each of the rip cords 30 is compressed between the core 10 and the sheath 20. At this time, there is a likelihood that the core 10 will be pressed by the rip cord 30, a lateral pressure will act on the optical fibers 11, and transmission loss of the optical fiber cable 1 will increase.

On the other hand, the rip cord 30 of the present embodiment is positioned within a range of -45° to +45° around the central axis O with the neutral line L as a reference in a transverse-sectional view. Particularly, in the example of FIG. 1, the rip cord 30 overlaps the tensile strength member 40 in the radial direction. Thereby, the rip cord 30 does not face the core 10 in the vertical direction Y. Therefore, it is possible to prevent a lateral pressure acting on the optical fiber 11 due to the rip cord 30 pressing against the core 10, and thereby it is possible to suppress an increase in transmission loss of the optical fiber cable 1.

The rip cord 30 is disposed inside the gap G surrounded by the recessed portion 12a of the core 10 and the sheath 20. Here, since a dimension of the gap G in the circumferential direction is larger than a dimension of the gap G in the radial direction, it is possible for the user to grip the rip cord 30 and move the rip cord 30 in the circumferential direction. Thereby, it is possible for the user to tear the sheath 20 using the rip cord 30 even when, for example, the rip cord 30 overlaps the tensile strength member 40 in the radial direction.

Since the recessed portion 12a of the wrapping member 12 protrudes radially inward, the recessed portion 12a digs into the plurality of optical fibers 11 and serves as a wedge. Thereby, the plurality of optical fibers 11 being deviated in the longitudinal direction inside the core 10 are curbed compared to a case in which, for example, the recessed portion 12a is not formed in the wrapping member 12. If the plurality of optical fibers 11 are twisted together inside the wrapping member 12, the plurality of optical fibers 11 are not easily untwined.

In a case in which the wrapping member 12 has water absorption properties, when the recessed portion 12a is formed in the wrapping member 12, the wrapping member 12 and the central axis O of the core 10 are brought closer to each other, and it is possible to make the recessed portion 12a efficiently absorb water from the vicinity of the central axis O of the core 10. Therefore, it is possible to enhance a waterproof performance of the optical fiber cable 1 compared to a case in which, for example, the recessed portion 12a is not formed in the wrapping member 12.

As described above, the optical fiber cable 1 according to the present embodiment includes the core 10 having the plurality of optical fibers 11 and the wrapping member 12 that wraps the plurality of optical fibers 11, the sheath 20 that houses the core 10, and the rip cord 30 disposed between the core 10 and the sheath 20, in which the recessed portion 12a recessed radially inward is formed in the wrapping member 12, and at least a portion of the rip cord 30 is positioned inside the recessed portion 12a. With this configuration, movement of the rip cord 30 in the circumferential direction is suppressed.

Also, the pair of tensile strength members 40 embedded in the sheath 20 are further provided with the core 10 positioned therebetween, in which the rip cord 30 is positioned within a range of -45° to +45° around the central axis O of the core 10 with the neutral line L as a reference in a transverse-sectional view. With this configuration, it is possible to prevent a lateral pressure acting on the optical fibers 11 in the core 10 due to the rip cord 30, and thereby it is possible to suppress an increase in transmission loss of the optical fiber cable 1.

Also, the pair of tensile strength members 40 embedded in the sheath 20 are further provided with the core 10 positioned therebetween, in which the gap G surrounded by the recessed portion 12a and the sheath 20 is formed between the core 10 and the sheath 20, a dimension of the gap G in the radial direction is smaller than a dimension of the gap G in the circumferential direction, the rip cord 30 is sandwiched between the recessed portion 12a and the sheath 20 inside the gap G, and the rip cord 30 overlaps at least one of the pair of tensile strength members 40 in the radial direction. According to this configuration, since the rip cord 30 is sandwiched between the recessed portion 12a and the sheath 20 in the radial direction, movement of the rip cord 30 in the circumferential direction is further suppressed. Also, since it is possible for the user to grip the rip cord 30 and move it in the circumferential direction, it is possible for the user to tear the sheath 20 using the rip cord 30.

Also, a method of manufacturing the optical fiber cable according to the present embodiment includes an extrusion step in which the core 10 formed by wrapping the plurality of optical fibers 11 with the wrapping member 12, the rip cord 30, and the nipple 50 having the core hole 52 and the rip cord hole 53 are prepared, the core 10 is inserted and extruded through the core hole 52, and the rip cord 30 is inserted and extruded through the rip cord hole 53, in which, in the extrusion step, introducing the rip cord 30 that has passed through the rip cord hole 53 into the recessed portion 12a inside the core hole 52 while forming the recessed portion 12a recessed radially inward in the wrapping member 12. According to this configuration, it is possible to manufacture the optical fiber cable 1 capable of suppressing movement of the rip cord 30 in the circumferential direction.

### [Examples]

Hereinafter, the above-described embodiment will be described using specific examples. Note that, the present invention is not limited to the following examples.

Four types of optical fiber cables of comparative example and examples 1 to 3 were prepared. The optical fiber cables each include a core in which 288 optical fibers are wrapped with a wrapping member, a sheath, a pair of tensile strength members, and a pair of rip cords. The only difference between the optical fiber cables was a shape (depth) of the recessed portion formed in the wrapping member, and the other configurations were the same between the optical fiber cables. Note that, in comparative example, the recessed portion was not formed in the wrapping member. A recess ratio C in Table 1 is a value defined by C = (2B/A)×100%, provided that a distance in the radial direction between an inner end portion 12aa of the recessed portion on an inner side in the radial direction and the sheath is B, and an outer diameter of the sheath is A.

Table 1 below shows results of ascertaining an untwining prevention performance, a waterproof performance, a core wire pull-out resistance, and transmission loss for each of the comparative example and examples 1 to 3.

In ascertaining the untwining prevention performance, a manufactured optical fiber cable was dismantled. When twisting of the optical fibers was maintained, it was evaluated as "OK," and when twisting of the optical fibers was not maintained, it was evaluated as "NG".

Ascertaining the waterproof performance was conducted under predetermined conditions according to IEC 60794-1-22 F5B. If a water running length was equal to or less than a predetermined distance, it was evaluated as "OK," and if the water running length was more than the predetermined distance, it was evaluated as "NG".

In ascertaining the core wire pull-out resistance, a pull-out force was applied to the plurality of optical fibers included in each cable. When a magnitude of the pull-out force required to move the plurality of optical fibers was greater than a predetermined value, it was evaluated as "OK," and when the magnitude was less than the predetermined value, it was evaluated as "NG".

In ascertaining the transmission loss, transmission loss at a predetermined wavelength was measured by an optical time domain reflectometer (OTDR). When a measured value was equal to or lower than a predetermined value, it was evaluated as "OK," and when the measured value was higher than the predetermined value, it was evaluated as "NG".

**[Table 1]**

| | Reces s ratio C (%) | Untwining prevention performance | Waterproof performance | Core wire pull-out resistance | Transmission loss |
|---|---|---|---|---|---|
| Comparative example | 0 | NG | NG | NG | OK |
| Example 1 | 10 | OK | OK | OK | OK |
| Example 2 | 30 | OK | OK | OK | OK |
| Example 3 | 50 | OK | OK | OK | Not ascertained |

As found from Table 1, the optical fiber cables with the recess ratio C of 10 to 30% exhibited satisfactory performances in all of the untwining prevention performance, the waterproof performance, the core wire pull-out resistance, and the transmission loss. Therefore, when the recessed portion is formed in the wrapping member and the recess ratio C is set within the range of 10 to 30%, it is possible to enhance a practical use of the optical fiber cable.

Note that, the technical scope of the present invention is not limited to the above-described embodiment, and various modifications may be made in a range not departing from the meaning of the present invention.

For example, a shape of the core 10 may be substantially elliptical in a transverse-sectional view except for a portion in which the recessed portion 12a is formed. Note that, the term "substantially elliptical" also includes a case of being regarded as elliptical in a transverse-sectional view if manufacturing errors are removed. In this case, the recessed portion 12a of the wrapping member 12 may be positioned on a major axis of the core 10. When the core 10 is elliptical in a transverse-sectional view, the optical fiber cable 1 does not easily bend in a direction in which the major axis of the core 10 extends. That is, the optical fiber cable 1 does not easily bend in a direction in which the pair of rip cords 30A and 30B (two recessed portions 12aA and 12aB) are aligned. Thereby, a lateral pressure acting on the optical fiber 11 due to the rip cord 30 pressing against the core 10 is further suppressed. Particularly, when a direction in which the pair of rip cords 30 are aligned substantially coincides with the neutral line direction X, the optical fiber cable 1 becomes less bendable in the direction in which the pair of rip cords 30 are aligned (neutral line direction X). Thereby, a lateral pressure acting on the optical fiber 11 due to the rip cord 30 pressing against the core 10 is more reliably suppressed. Note that, the words "a direction in which the pair of rip cords 30 are aligned substantially coincides with the neutral line direction X" mean, more specifically, that the rip cord 30 is positioned within a range of -45° to +45° around the central axis O with the neutral line L as a reference in a transverse-sectional view.

Further, when the core 10 is substantially elliptical as described above and the plurality of optical fibers 11 are twisted together inside the wrapping member 12, the plurality of optical fibers 11 become more difficult to untwine compared to a case in which, for example, the core 10 is circular in a transverse-sectional view.

Note that, it is possible to estimate a shape of a portion of the core 10 excluding the portion in which the recessed portion 12a is formed, for example, as follows. First, three points are selected at approximately equal intervals in the circumferential direction from a portion of an outline (outer circumference) of the core 10 other than the recessed portion 12a. Next, a virtual circle passing through the selected three points is created. Note that, it is possible to create the virtual circle using, for example, a three-point circle creation function of the Digital microscope (VHX-6000) manufactured by Keyence Corporation. Next, the created virtual circle is compared with the outline of the actual core 10, and thereby it is possible to determine whether or not a shape of the core 10 is an ellipse. Also, it is possible to estimate that a direction in which the outline of the core 10 protrudes outside the virtual circle is a major axis, and a direction in which the outline of the core 10 is positioned inside the virtual circle is a minor axis.

The number of the rip cords 30 and the tensile strength members 40 may be changed as appropriate. The number of the rip cords 30 and the tensile strength members 40 may be any number of one or more. The optical fiber cable 1 may not include the tensile strength member 40.

In addition, the components in the above-described embodiments may be appropriately replaced with well-known components within a range not departing from the meaning of the present invention, and the embodiments and modified examples described above may be appropriately combined.

### [Reference Signs List]

1 Optical fiber cable
10 Core
11 Optical fiber
12 Wrapping member
12a Recessed portion
20 Sheath
30 Rip cord
40 Tensile strength member
50 Nipple
52 Core hole
53 Rip cord hole
G Gap
L Neutral line

## Claims

1. An optical fiber cable comprising:
a core including a plurality of optical fibers and a wrapping member which wraps the plurality of optical fibers;
a sheath housing the core; and
a rip cord disposed between the core and the sheath, wherein
a recessed portion recessed inward in a radial direction of the core is formed in the wrapping member, and
at least a portion of the rip cord is positioned inside the recessed portion.

2. The optical fiber cable according to claim 1, further comprising a pair of tensile strength members embedded in the sheath with the core positioned therebetween, wherein
in a transverse-sectional view orthogonal to a central axis of the core, the rip cord is positioned within a range of -45° to +45° around a center of the core, with a neutral line connecting centers of the pair of tensile strength members as a reference.

3. The optical fiber cable according to claim 1 or 2, wherein
a shape of the core is substantially elliptical in a transverse-sectional view orthogonal to the central axis of the core, except for a portion in which the recessed portion is formed, and
the recessed portion is positioned on a major axis of the core.

4. The optical fiber cable according to any one of claims 1 to 3, further comprising a pair of tensile strength members embedded in the sheath with the core positioned therebetween, wherein
a gap surrounded by the recessed portion and the sheath is formed between the core and the sheath,
a dimension of the gap in the radial direction is smaller than a dimension of the gap in the circumferential direction of the core,
inside the gap, the rip cord is sandwiched between the recessed portion and the sheath, and
the rip cord overlaps at least one of the pair of tensile strength members in the radial direction.

5. The optical fiber cable according to any one of claims 1 to 4, wherein a recess ratio of the recessed portion defined by C = (2B/A)×100% satisfies 10% ≤ C ≤ 30%, provided that a distance in the radial direction between an inner end portion of the recessed portion in the radial direction and the sheath is B, and an outer diameter of the sheath is A.

6. A method of manufacturing an optical fiber cable comprising:
preparing:
a core formed by wrapping a plurality of optical fibers with a wrapping member;
a rip cord; and
a nipple having a core hole and a rip cord hole; and
introducing the rip cord which has passed through the rip cord hole into a recessed portion inside the core hole while forming the recessed portion recessed inward in a radial direction of the core in the wrapping member, when the core is inserted and extruded through the inside of the core hole and the rip cord is inserted and extruded through the inside of the rip cord hole.
